# NEUE EUROPÄISCHE PATENTSCHRIFT

(11) **EP 2 837 280 B2**
(45) Veröffentlichungstag und Bekanntmachung des Hinweises auf die Entscheidung über den Einspruch: **04.05.2022**
(45) Hinweis auf die Patenterteilung: 12.04.2017
(21) Anmeldenummer: 14169227.7
(22) Anmeldetag: 21.05.2014
(51) Int. Cl.: A01F 12/40

(54) **Mähdrescher mit einer Häckselvorrichtung**
Combine harvester with a chopping device
Moissonneuse-batteuse équipée d'un dispositif de hache-paille

(30) Priorität: 01.08.2013 DE 102013108292
(43) Veröffentlichungstag der Anmeldung: 18.02.2015
(73) Patentinhaber: CLAAS Selbstfahrende Erntemaschinen GmbH, 33428 Harsewinkel (DE)
(72) Erfinder: Brinkmann, Jörn, 33428 Harsewinkel (DE); Amsbeck, Dieter, 33428 Harsewinkel (DE); Nollmann, Jürgen, 33775 Versmold (DE); Beulke, Christian, 33428 Harsewinkel (DE); Ducrée, Dirk, 59939 Olsberg (DE)
(74) Vertreter: Dekker, Lothar Karl Rudolf

(56) Entgegenhaltungen:
- EP-A1- 1 671 530
- EP-A2- 0 415 419
- EP-A2- 0 538 599
- EP-A2- 1 738 636
- DE-A1- 4 124 145
- DE-A1- 10 107 776
- US-A1- 2010 291 982
- US-A1- 2012 056 024

## Beschreibung

Die vorliegende Erfindung betrifft einen Mähdrescher mit einer Häckselvorrichtung zum Zerkleinern von Erntegut, die eine mit Messern besetzte Häckseltrommel, ein Messerträger sowie eine Reibleiste umfasst, gemäß dem Oberbegriff des Anspruches 1.

Aus der DE 1 896 312 U1 ist eine Vorrichtung zum Zerschneiden von Heu oder strohähnlichem Material bekannt, welche einen rotierenden, mit Messern besetzten Läufer aufweist, dessen Messer zwischen einer Vielzahl von in einer Reihe angeordneten Gegenmessern hindurch passieren. Die Gegenmesser sind auf einem gemeinsamen Träger angeordnet, der um seine Längsachse schwenkbar ist, um die Neigung der Gegenmesser einstellen zu können. Die Verstellung des Trägers erfolgt durch eine Hebelanordnung, die durch eine Mutter vor einer Verstellung während des Betriebes durch Vibrationen der Vorrichtung gesichert ist.

Die US 2010/0291982 A1 beschreibt einen Mähdrescher gemäß dem Oberbegriff des Anspruches 1.

Aus der EP 0 538 599 A2 ist eine Häckselvorrichtung für einen Mähdrescher mit einem verstellbaren Reibboden bekannt.

Der Erfindung liegt die Aufgabe zu Grunde, die Einstellbarkeit von Messerträger und Reibleiste zu ermöglichen und zu vereinfachen, um eine optimale Häckselqualität zu gewährleisten.

Diese Aufgabe wird erfindungsgemäß durch die kennzeichnenden Merkmale des Anspruches 1 gelöst.

Vorteilhafte Weiterbildungen sind Gegenstand der Unteransprüche.

Gemäß Anspruch 1 wird vorgeschlagen, dass die Gegenmesserleiste und der Reibboden mittels einer Aktorik werkzeuglos verstellbar sind. Das werkzeuglose Verstellen des Messerträgers sowie des Reibbodens hat für den Bediener des Mähdreschers den Vorteil, dass dieser die Häckselvorrichtung schnell und auf einfache Weise auf sich ändernde Erntebedingungen wie einen Fruchtartwechsel oder während eines Erntetages variierende Erntegutfeuchte einstellen kann. Es bedarf lediglich der werkzeuglosen Betätigung der Aktorik, um die Position des Messerträgers und den von dieser getragenen Gegenmesser sowie des Reibbodens zur Aktivierung oder Deaktivierung der Reibleiste zu verändern, um Einfluss auf die Häckselqualität nehmen zu können. Vorzugsweise können der Messerträger und der Reibboden unabhängig voneinander verstellbar sein. Durch die voneinander unabhängige Verstellbarkeit kann unter insbesondere feuchten Bedingungen der Reibboden derart verstellt werden, dass die Reibleiste nicht mit dem die Häckselvorrichtung passierenden Gutstrom in Eingriff steht, wodurch sich einerseits Energie einsparen lässt und andererseits einem möglichen Gutstau in der Häckselvorrichtung vorgebeugt wird, während die Einstellung des Messerträgers unverändert bleibt.

Gemäß einer nicht vom Anspruch 1 umfassten Ausführung ist vorgesehen, dass die Aktorik als jeweils ein manuell betätigbarer Hebel ausgeführt ist, der unmittelbar auf der Drehachse des Messerträgers beziehungsweise des Reibbodens angeordnet ist. Dadurch, dass der jeweilige Hebel unmittelbar an der Drehachse des Messerträgers beziehungsweise des Reibbodens angreift, ist eine zusätzliche Kraft- und Bewegungsübertragung durch zwischengeschaltete Hebelelemente nicht erforderlich.

Die Aktorik kann als mit einem Fluid beaufschlagbaren Zylinder ausgeführt sein. Hierbei kann es sich um zumindest einen hydraulisch oder pneumatisch beaufschlagbaren Zylinder handeln. Denkbar ist auch eine Kombination eines hydraulisch und eines pneumatisch beaufschlagbaren Zylinders als Aktorik für den Messerträger sowie den Reibboden.

Hierzu kann der Verstellweg des jeweiligen Zylinders durch ein Begrenzungsmittel beschränkbar sein. Beispielsweise kann als Begrenzungsmittel ein Federbolzen zum Einsatz kommen, der den Verstellweg des jeweiligen Zylinders auf zwei definierte Positionen beschränkt. Während die Reibleiste durch Verstellung des Reibbodens mittels des zugehörigen Zylinders vorzugsweise aus ihrer aktiven Position, in der sie mit dem Gutstrom in Eingriff steht, in eine inaktive Position überführbar ist, in der die Reibleiste nicht mit dem Gutstrom in Eingriff steht, ist es für die Verstellung des Messerträgers sinnvoll, unterschiedliche Positionen ansteuern zu können. Beispielsweise lässt sich durch das als Federbolzen ausgeführte Begrenzungsmittel der Verstellweg des die Gegenmesserleiste betätigenden Zylinders wahlweise auf Positionen zwischen halb eingeschwenkt und ganz ausgeschwenkt beziehungsweise zwischen halb eingeschwenkt oder ganz eingeschwenkt umstellen. Diese Umstellung kann wegen der Ausführung des Begrenzungsmittels als Federboizen ebenfalls werkzeuglos erfolgen.

In bevorzugter Weiterbildung kann der Verstellweg der Zylinder mittels eines Winkelsensors detektierbar sein. Durch den Winkelsensor kann der jeweilige Schwenkwinkel des Messerträgers sowie des Reibbodens, um welchen diese durch den jeweiligen Zylinder verschwenkt werden, erfasst werden. Mit dem Erreichen der jeweils angestrebten Position lässt sich die Beaufschlagung des jeweiligen Zylinders unterbrechen, um den Messerträger beziehungsweise den Reibboden in der erreichten Position zu halten. Hierdurch lässt sich auf einfache Weise eine stufenlose Verstellung von Messerträger und Reibboden respektive Aktivierung und Deaktivierung der Reibleiste erreichen.

Eine alternative Ausführung zur stufenlosen Verstellung sieht vor, dass die Aktorik als elektromechanischer Antrieb ausgeführt sein kann. Hierbei kann es sich um einen elektromechanischen Linearantrieb handeln, dessen translatorische Bewegung in eine rotatorische Bewegung des Messerträgers beziehungsweise des Reibbodens um deren jeweilige Schwenkachse umgesetzt wird.

Der Mähdrescher umfasst eine Steuereinrichtung, durch welche die als Zylinder und/oder Linearantrieb ausgeführte Aktorik ansteuerbar ist. Die Steuereinrichtung ist durch eine Bedienperson bedienbar, um die gewünschte Einstellung von Messerträger und/oder Reibboden in Abhängigkeit von vorherrschwenden Erntebedingungen, wie Erntegutart oder Erntegutfeuchtigkeit, oder sonstigen Parametern vorzunehmen. Die Einstellung erfolgt in der Regel anhand von Erfahrungswerten der Bedienperson beim Betreiben eines Mähdreschers, welche im Allgemeinen von Bedienperson zu Bedienperson unterschiedlich ausgeprägt sind. Die Ansteuerung der Aktorik zur Einstellung von Messerträger und/oder Reibboden mittels der Steuereinrichtung durch eine Bedienperson ermöglicht eine unmittelbare Einflussnahme auf die Effizienz des Häckselprozesses und dessen Qualität.

Vorteilhafterweise kann die Aktorik unabhängig von anderen Arbeitsaggregaten des Mähdreschers ansteuerbar sein. Die Ansteuerung der Aktorik durch die Steuereinrichtung hat den Vorteil, dass die Anpassung der Einstellung von Messerträger und/oder Reibboden während des laufenden Ernteprozesses erfolgen kann. Eine Unterbrechung des Ernteprozesses, wie dies bei einer manuellen, insbesondere werkzeugbehafteten Verstellung von Messerträger und/oder Reibboden, entfällt. Vielmehr kann die Bedienperson die Anpassung bei bestehenden Betriebskonditionen des Mähdreschers vornehmen, das heißt unabhängig von den Betriebsparametern der anderen Arbeitsaggregaten des Mähdreschers, so dass durch die Bedienperson Rückschlüsse daraus gezogen werden können, inwieweit die vorgenommene Anpassung der Einstellung von Messerträger und/oder Reibboden zu dem gewünschten Ergebnis geführt hat.

Vorteilhafterweise kann die Steuereinrichtung zur automatischen Ansteuerung des Messerträgers und des Reibbodens eingerichtet sein. Hierdurch kann eine Vereinfachung der Handhabung sowie eine damit einhergehende Entlastung der Bedienperson erreicht werden. Dabei kann vorgesehen sein, dass Steuereinrichtung dazu eingerichtet ist, dass die Bedienperson zwischen Automatikmodi wählen kann, wobei ein Modus auf die Einhaltung einer optimalen Häckselqualität abstellt, während ein weiterer Modus auf eine energieeffizienten Betrieb der Häckselvorrichtung abstellt. Die Bedienperson erhält somit die Möglichkeit, im Rahmen der automatisierten Einstellung von Messerträger und/oder Reibboden selbsttätig zu entscheiden, ob diese bei wechselnden Umgebungs- und Arbeitsbedingungen mehr Wert auf eine optimale Häckselqualität oder auf Energieeffizienz legt.

Erfindungsgemäß erfolgt die Ansteuerung des Messerträgers und des Reibbodens in Abhängigkeit von Ernteguteigenschaften und/oder Betriebsparametern. Hierdurch kann eine effizientere Bearbeitung des zu häckselnden Erntegutes erzielt werden. Zudem lässt sich eine gleichbleibende Häckselqualität erreichen. Die Ernteguteigenschaften sowie die Betriebsparameter können durch die Bedienperson durch Eingabe in die Steuereinrichtung vorgeben werden, beispielsweise durch eine Auswähl aus einer Liste von Erntegutarten oder eine direkte Eingabe von Betriebsparametem repräsentierenden Werten.

Hierzu umfasst der Mähdrescher eine zur Erfassung von Ernteguteigenschaften und/oder Betriebsparametern eingerichtete Sensorik, mit welcher die Steuereinrichtung in Wirkverbindung steht. Hierzu kann die Sensorik als Sensor zur Erfassung der Feuchtigkeit von Erntegut ausgeführt sein, dessen Signale durch eine Signalübertragungsleitung
an die Steuereinrichtung geleitet werden, die diese Signale auswertet. Auf Basis dieser Auswertung kann die Steuereinrichtung dann die Aktorik zur Einstellung des Messerträgers sowie des Reibbodens ansteuern, um deren Einstellung an sich ändernde Bedingungen anzupassen.

Vorzugsweise kann die Sensorik eine Bilderfassungseinrichtung umfassen. Eine Bilderfassungseinrichtung böte den Vorteil beispielsweise der Ernteguterkennung, um auf Basis dieser Erkennung die Einstellungen von Messerträger und/oder Reibboden durchzuführen. Eine weiteres Anwendungsbeispiel für eine Bilderfassungseinrichtung wäre die Erfassung und Auswertung der Qualität des von der Häckselvorrichtung ausgegebenen Häckselgutes, um auf dieser Basis die jeweilige Einstellungen des Messerträgers und/oder des Reibbodens zu steuern beziehungsweise zu regeln, indem die Aktorik in Abhängigkeit von der detektierten Qualität des Häckselgutes an die Vorgabe einer Bedienperson angepasst wird.

Alternativ oder ergänzend kann die Sensorik eine Einrichtung zur Detektion von Feuchtigkeit umfassen. Ein entsprechender Feuchtigkeitssensor kann im Schrägförderer des Mähdreschers angeordnet sein, um den Feuchtigkeitsgehalt des Erntegutes zu einem möglichst frühen Zeitpunkt zu detektieren. Somit stünde der Steuereinrichtung ausreichend Zeit zur Verfügung, als Reaktion auf einen sich signifikant ändernden Feuchtigkeitsgehalt des Erntegutes die Einstellungen des Messerträgers und/oder des Reibbodens entsprechend anzupassen.

Weiterhin kann der Mähdrescher eine Kabine umfassen, in welcher eine mit der Steuereinrichtung verbindbare Eingabe- und Ausgabeeinheit angeordnet ist. Diese dient als Kommunikationsschnittstelle mit der Steuereinrichtung. Die Eingabe- und Ausgabeeinheit bietet einer Bedienperson die Möglichkeit, sich beispielsweise über aktuelle Betriebsparameter zu informieren, aber auch der Vorgabe von einzuhaltenden Parametern wie der angestrebten Häckselgutqualität beziehungsweise der unmittelbaren Einstellung von Betriebsparametern durch die Bedienperson, die sich an den Erntebedingungen orientieren.

Die vorliegende Erfindung wird nachstehend anhand von in den Zeichnungen dargestellten Ausführungsbeispielen näher erläutert.

Es zeigen:
- Fig. 1: eine schematische Seitenansicht eines Mähdreschers;
- Fig. 2a: eine schematische Detailansicht einer Häckselvorrichtung gemäß Fig. 1 in einer ersten , nicht beanspruchten Ausführungsform;
- Fig. 2b: eine schematische Detailansicht der Häckselvorrichtung gemäß Fig. 2a mit aktivierter Reibleiste;
- Fig. 2c: eine schematische Detailansicht der Häckselvorrichtung gemäß Fig. 2a mit deaktivierten Gegenmessern;
- Fig. 3: eine schematische Detailansicht einer Häckselvorrichtung gemäß Fig. 1 in einer zweiten Ausführungsform;
- Fig. 4: eine schematische Detailansicht einer Häckselvorrichtung gemäß Fig. 1 in einer dritten Ausführungsform.

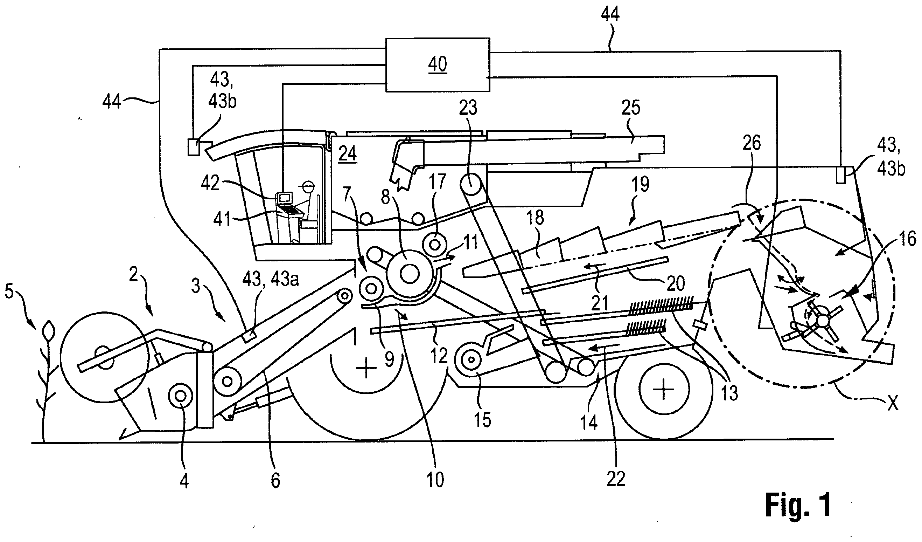

Der in Fig. 1 schematisch dargestellte Mähdrescher 1 nimmt in seinem frontseitigen Bereich ein als Getreideschneidwerk 2 ausgeführtes Vorsatzgerät auf, welches in an sich bekannter Weise mit dem Schrägförderer 3 des Mähdreschers 1 verbunden ist. Das Querförderorgan 4 des Schneidwerkes 2 übergibt von diesem aufgenommenes Erntegut 5 an den Schrägförderer 3, wobei dieser das Erntegut 5 mittels umlaufendem Förderer 6 in seinem obenseitigen rückwärtigen Bereich an das Dreschwerk 7 des Mähdreschers 1 übergibt. In dem ein- oder mehrtrommelig ausgeführten Dreschwerk 7 wird das Erntegut 5 zwischen den Dreschtrommeln 8 und einem diese wenigstens teilweise ummantelnden Dreschkorb 9 hindurchgeführt und in zumindest zwei Teilströme 10, 11 getrennt. Der erste Teilstrom 10 besteht im Wesentlichen aus Körnern, Kurzstroh und Spreu und wird über einen Vorbereitungsboden 12 unmittelbar einer aus verschiedenen Siebebenen 13 bestehenden Reinigungseinrichtung 14 zugeführt. Die Reinigungseinrichtung 14 nimmt zudem eine Gebläseeinheit 15 auf, die einen die Siebebenen 13 durchsetzenden Luftstrom generiert.

Der im rückwärtigen Bereich des Dreschwerks 7 aus diesem austretende weitere, im Wesentlichen aus Stroh und einem Restkornanteil bestehende zweite Teilstrom 11 wird mittels einer Strohleittrommel 17 auf ein als Hordenschüttler 18 ausgeführtes Abscheideorgan 19 geleitet. Durch die oszillierende Bewegung des Hordenschüttlers 18 wird ein großer Anteil der in der Strohschicht enthaltenen Körner 21 auf dem Hordenschüttler 18 abgeschieden und über einen sogenannten Rücklaufboden 20 und den Vorbereitungsboden 12 an die Reinigungseinrichtung 14 übergeben. Das Abscheideorgan 19 kann in bekannter Weise auch als Axialabscheidevorrichtung mit einem oder mehreren Abscheiderotoren ausgeführt sein.

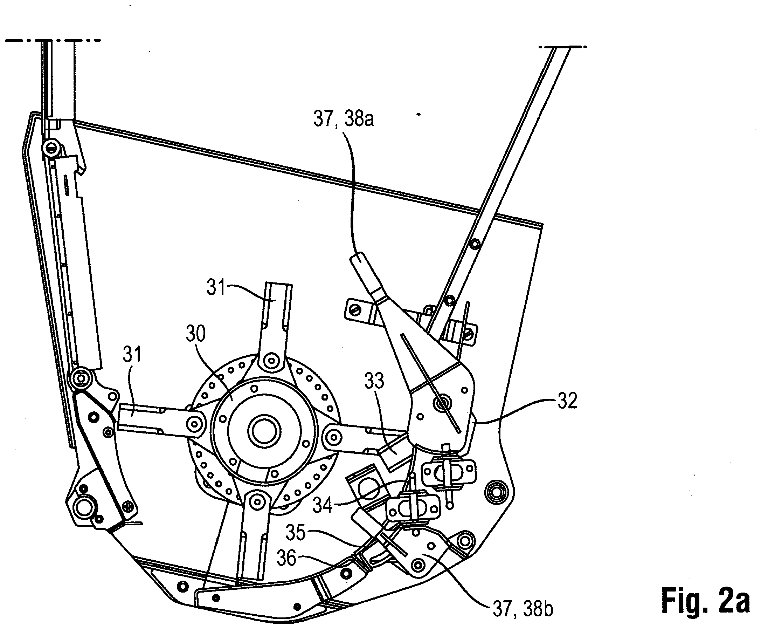

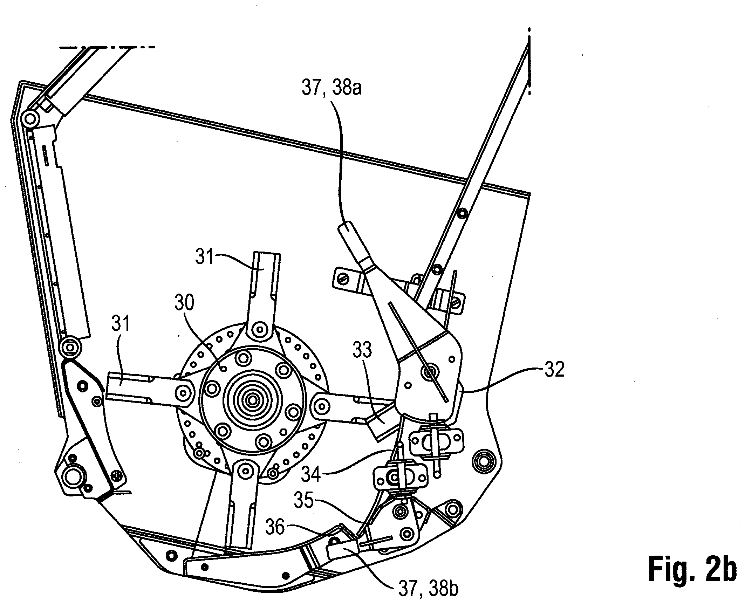

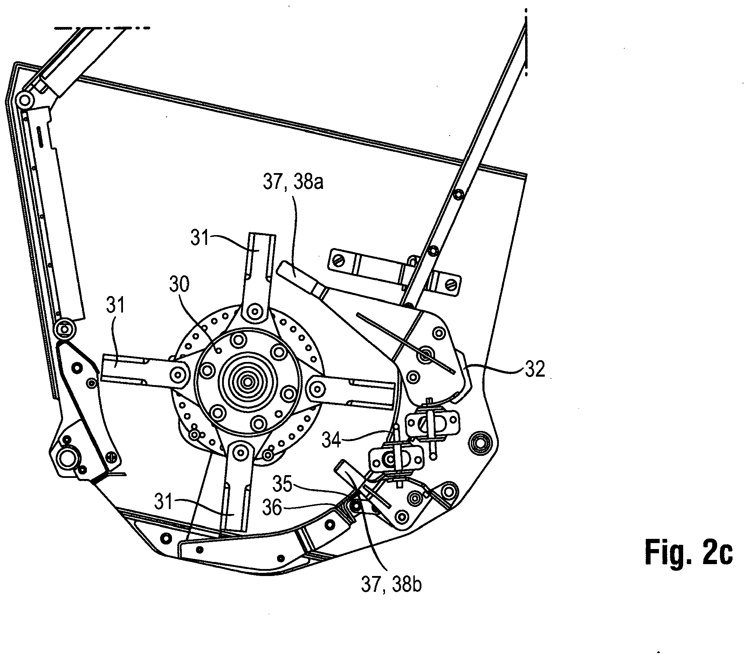

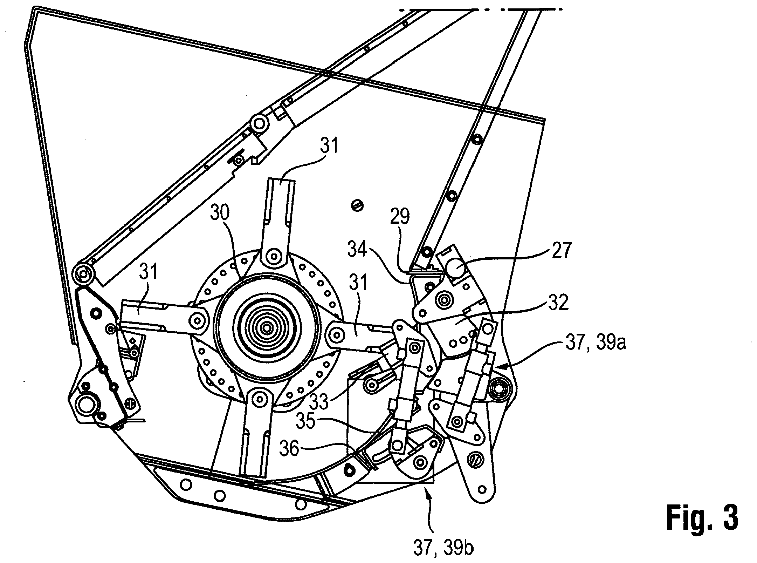

In der Reinigungseinrichtung 14 wird schließlich aus den in sie eingeleiteten verschiedenen Gutströmen 10, 21 ein gereinigter Körnerstrom 22 mittels Förderelevatoren 23 in einen Korntank 24 gefördert und dort zwischengespeichert. Die Entleerung des Korntanks 24 erfolgt in der Regel mittels eines Korntankentleerförderers 25. Durch die oszillierende Bewegung der Schüttlerhorden wird das von den Dreschorganen 7 an den Hordenschüttler 18 übergebene Erntegut 11 auf diesem in Form einer Aneinanderreihung von Wurfbewegungen gefördert und schließlich im rückwärtigen Bereich des Hordenschüttlers 18 als im Wesentlichen nur Stroh enthaltender Gutstrom 26 in Richtung einer nachgelagerten Häckselvorrichtung 16 abgegeben. Die Weiterbehandlung des Gutstromes 26 wird nachfolgend anhand der Fig. 2a, 2b, 2c und Fig. 3 beschrieben.

Die Darstellung in Fig. 2a zeigt eine schematische Detailansicht X der Häckselvorrichtung 16. Die Häckselvorrichtung 16 umfasst eine Messertrommel 30 mit daran angeordneten Schlegelmessern 31 sowie in Gutförderrichtung gesehen, eine Querschneide 29, einen Messerträger 32, auf dem Gegenmesser 33 angeordnet sind, die mit den Schlegelmessern 31 auf der Messertrommel 30 abschnittsweise in Eingriff bringbar sind, einen sich abschnittsweise in Umfangsrichtung der Messertrommel 30 erstreckenden, separaten Bodenabschnitt 34 mit sich abschnittsweise in Umfangsrichtung erstreckenden Schlitzen in seiner Oberfläche, hinter dem der Messerträger 32 mit den Gegenmessern 33 angeordnet ist, die durch die Schlitze hindurchtreten können, einen Reibboden 35 sowie eine sich in Umfangsrichtung gesehen an den Reibboden 35 anschließende Reibleiste 36. Dem Messerträger 32 und dem Reibboden 35 ist jeweils eine Aktorik 37 zugeordnet, um diese unabhängig voneinander werkzeuglos verstellen zu können.

Wie der Darstellung in Fig. 2a zu entnehmen ist, erstrecken sich der Bodenabschnitt 34, der Reibboden 35 sowie die Reibleiste 36 im Wesentlichen koaxial zur Rotationsachse der Messertrommel 30. Diese Elemente der Häckselvorrichtung 16 dienen der Führung und der Beeinflussung des Häckselvorganges während der Bearbeitung des von dem Hordenschüttler 18 abgegebenen Erntegutes durch die Häckselvorrichtung 16. Um den Häckselvorgang und damit die Qualität des Häckselgutes zu beeinflussen, werden unterschiedliche Maßnahmen ergriffen, wie nachstehend ausgeführt wird.

Beispielsweise kann das Schneiden des Strohs im freien Schnitt erfolgen, das heißt ohne eine Unterstützung durch die Gegenmesser 33. Hierzu sind die Gegenmesser 33 außer Eingriff mit den Schlegelmessern 31 bringbar, indem der hinter dem Bodenabschnitt 34 angeordnete Messerträger 32 soweit in radialer Richtung verschwenkbar ist, dass sich die Messer gegenüber der Oberfläche des Bodenabschnitts 34 vollständig zurückgezogen haben, wie dies in Fig. 2c dargestellt ist. Diese Position des Messerträgers 32 führt im Ergebnis zu einer großen Häcksellänge und findet beispielsweise bei der Verarbeitung von Mais oder Raps als Erntegut 5 durch den Mähdrescher 1 Anwendung.

Die in der Fig. 2a dargestellte Position des Messerträgers 32 findet bei der Verarbeitung von Getreide oder Reis als Erntegut 5 durch den Mähdrescher 1 Anwendung. In dieser Position ist die Häcksellänge signifikant kürzer. Darüber hinaus sind Zwischenpositionen einstellbar, in denen die Gegenmesser 33 unterschiedlich weit gegenüber der Oberfläche des Bodenabschnittes 34 hinausragen, was zu unterschiedlichen Häcksellängen führt.

Weiterhin lässt sich die Häcksellänge durch ein Verschwenken des Reibbodens 35 beeinflussen. Das Verschwenken des Reibbodens 35 in radialer Richtung auf die Messertrommel 30 zu oder von dieser weg, resultiert in einer größeren Häcksellänge beziehungsweise einer kürzeren Häcksellänge. Durch das Verschwenken wird die Reibleiste 36, die in Gutflussrichtung gesehen dem Reibboden 35 nachgeordnet ist, in unterschiedlichem Maß mit dem Gutstrom in Eingriff gebracht. Auch hier wird erntefruchtartabhängig hinsichtlich der Einstellung der Position des Reibbodens 35 unterschieden, wobei für Mais oder Reis der Reibboden 35 soweit in Richtung der Messertrommel 30 eingeschwenkt, dass die Häcksellänge sehr groß ist, wie in Fig. 2a dargestellt ist, während bei der Verarbeitung von Getreide der Reibboden 35 in radialer Richtung weit beabstandet von der Messertrommel 30 positioniert ist, um eine möglichst kurze Häcksellänge zu erzielen, was der Darstellung in Fig. 2b zu entnehmen ist. Je größer die Beabstandung des Reibbodens 35 in radialer Richtung zur Messertrommel 30, desto größer ist der Einfluss, den die Reibleiste 36 auf den zu häckselnden Gutstrom ausüben kann, mit dem die Reibleiste 36 zunehmend in Eingriff bringbar ist. Auch bei der Verstellung des Reibbodens 35 können verschiedene Positionen einstellbar sein, um unterschiedliche Häcksellängen realisieren zu können, indem die Reibleiste 36 in unterschiedlichem Maße mit dem Gutstrom in Eingriff bringbar ist.

Die Aktorik 37 ist gemäß dem in den Fig. 2a bis 2c dargestellten , nicht beanspruchten Ausführungsbeispiel jeweils als ein Hebel 38a, 38b ausgeführt, die jeweils an einem äußeren Ende der Drehachse des Messerträgers 32 beziehungsweise des Reibbodens 35 angreifen, um diese verschwenken zu können. Der an dem Messerträger 32 angeordnete Hebel 38a kann dabei so ausgeführt sein, dass dieser eine beschränkte Anzahl von Stellungen einnehmen kann, so dass der Messerträger 32 und mit diesem die Gegenmesser 33 zwischen einer vollständig eingeschwenkten Position und einer vollständig ausgeschwenkten Position in mindestens eine Zwischenposition überführbar ist, in der die Gegenmesser 33 nur teilweise durch Schlitze des Bodenabschnittes 34 hinausragen. In gleicher Weise lässt sich durch den Hebel 38b der Reibboden 35 ein- oder ausschwenken, so dass die Reibleiste 36 in eingeschwenkter Position des Reibbodens 35 mit dem Gutstrom in Eingriff bringbar ist beziehungsweise in ausgeschwenkter Position des Reibbodens 35 nicht. Hierzu können an den Hebeln 38a, 38b auf ihrer einer die Häckselvorrichtung 16 umgebenden Wandung zugewandten Seite Vorsprünge angeordnet sein, die in korrespondierende Ausnehmungen in der Wandung eingreifen und die die möglichen Positionen des Hebels 38 a, 38b festlegen. Die Verstellung mittels der Hebel 38a, 38b erfolgt werkzeuglos, jedoch muss die Bedienperson des Mähdreschers 1 die Kabine hierfür verlassen.

Um die manuelle, wenn auch werkzeuglose, Handhabung überflüssig werden zu lassen, ist gemäß der zweiten, in Fig. 3 dargestellten Ausführungsform vorgesehen, dass die Aktorik 37 jeweils als ein Hydraulikzylinder 39a, 39b ausgeführt ist, welche über eine Steuereinrichtung 40, die zur Steuerung und/oder Regelung einiger oder aller Arbeitsaggregate des Mähdreschers 1 zum Einsatz kommen kann, ansteuerbar sind.

Die Steuereinrichtung 40 umfasst eine Eingabeeinheit 41, wie beispielsweise eine Tastatur, und eine Ausgabeeinheit 42 in Form einer Anzeigevorrichtung oder eine als Touchscreen ausgeführte Eingabe- und Ausgabeeinheit. Der Bedienperson des Mähdreschers 1 ermöglichen diese Kommunikationsschnittstellen 41, 42 mit der Steuereinrichtung 40 zu kommunizieren, das heißt sich aktuelle Betriebsparameter der Arbeitsaggregate anzeigen zu lassen sowie durch eine gezielte Eingabe entsprechende Betriebsparameter an sich ändernde Erntebedingungen anzupassen. Die voneinander unabhängige Ansteuerbarkeit der Hydraulikzylinder 39a, 39b von der Kabine aus hat zudem den Vorteil, dass die Bedienperson schneller auf sich ändernde Erntebedingungen, wie feuchte Stellen in einem abzuerntenden Feld, reagieren kann, indem die Bedienperson beispielsweise durch das Überführen des Reibbodens 35 in Richtung der Messertrommel 30 die Reibleiste 36 deaktiviert. Die Deaktivierung der Reibleiste 36 erfolgt dadurch, dass der Reibboden 35 so weit in Richtung der Messertrommel 30 eingeschwenkt ist, dass die Reibleiste 36 nicht mehr in den Gutstrom hineinragt. Hierdurch lässt sich Leistungsaufnahme der Häckselvorrichtung 16 temporär, dass heißt für die Dauer des Passierens der feuchten Stelle auf dem Feld, mindern beziehungsweise die Gefahr eines Erntegutstaus reduzieren, die aus der Verarbeitung sehr feuchten Erntegutes resultieren kann. Nachdem diese Stelle passiert wurde, kann die Bedienperson die Reibleiste 36 durch eine entsprechende Ansteuerung des Reibbodens 35 wieder teilweise oder ganz aktivieren, dass heißt den Reibboden 35 von der Messertrommel 30 beabstanden, so dass die Reibleiste 36 teilweise oder vollständig in den Gutstrom hineinragt. Die Verstellung zumindest des Messerträgers 32 lässt sich durch ein als Federbolzen 27 ausgeführtes Begrenzungselement einschränken. Der Federbolzen 27 begrenzt den Verstellweg der Hydraulikzylinder 39a, 39b, wobei vorzugsweise zwei Stellungen des Federbolzens 27 vorgesehen sind, die jeweils die Einstellung zweier verschiedener Positionen des Messerträgers 32 ermöglichen. So kann der Verstellweg derart beschränkt werden, dass der Messerträger 32 durch den Federbolzen 27 entweder eine halb eingeschwenkte beziehungsweise ganz ausgeschwenkte Position oder eine halb eingeschwenkte beziehungsweise ganz eingeschwenkte Position einnehmen kann.

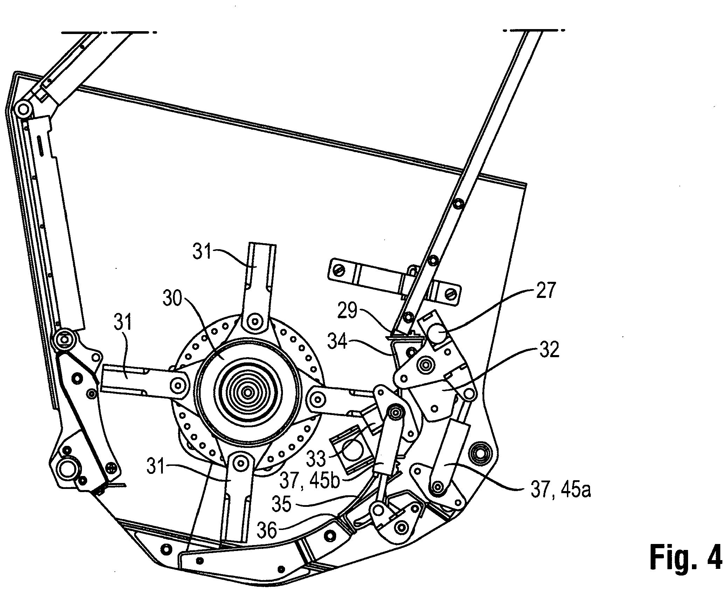

Die Darstellung in Fig. 4 zeigt ein weiteres Ausführungsbeispiel, bei welchem die Aktorik 37 als elektromechanischer Linearantrieb 45a, 45b ausgeführt ist. Die Ausführung der Aktorik 37 als elektromechanischer Linearantrieb 45a, 45b hat den Vorteil, dass eine stufenlose Verstellbarkeit des Messerträgers 32 und des Reibbodens 35 möglich ist. Dies kann in gleicher Weise auch durch die Hydraulikzylinder 39a, 39b erreicht werden, wenn diese über eine Wegrückführung verfügen.

Die Ausführung der Aktorik 37 als Hydraulikzylinder 39a, 39b oder als elektromechanische Linearantriebe 45a, 45b hat den Vorteil, dass eine Verstellung der Positionierung von Messerträger 32 und/oder Reibboden 35 jederzeit im laufenden Betrieb des Mähdreschers 1 möglich ist. Die Aktorik 37 kann während des Dreschens verstellt werden, ohne den laufenden Dreschprozess unterbrechen zu müssen und der sich einstellende Erfolg oder Misserfolg der Verstellung von Messerträger 32 und/oder Reibboden 35 kann unmittelbar von der Bedienperson bewertet werden.

Die Bedienperson kann die Änderung unmittelbar vornehmen, ohne dass andere Parameter verändert werden. Insbesondere das Entfallen der Erntebetriebsunterbrechhung ist von Vorteil, da die Bedienperson lediglich die Einstellung von Messerträger 32 und/oder Reibboden 35 beziehungsweise Reibleiste 36 verändert, während die übrigen Arbeitsparameter der Arbeitsaggregate unverändert bleiben. Neben der damit verbundenen Zeitersparnis erhält die Bedienperson die Möglichkeit, die Auswirkungen einer vorgenommenen Verstellung von Messerträger 32 und/oder Reibboden 35 auf die Häckselgutqualität unmittelbar auf diese zurückzuführen. Die in den Figuren 2b und 2c beispielhaft dargestellten Positionen von Gegenmesserträger 32 beziehungsweise Reibboden 35 zur Veranschaulichung der unabhängigen Verstellung von Gegenmesserträger 32 und Reibboden 35 lassen sich entsprechend auch durch die als Hydraulikzylinder 39a, 39b oder als elektromechanische Linearantriebe 45a, 45b ausgeführte Aktorik 37 erreichen.

Weiterhin ist vorgesehen, dass die Bedienperson von dem Vorgang der Anpassung der Einstellung von Messerträger 32 und/oder Reibboden 35 durch eine entsprechende Eingabe über die Kommunikationsschnittstellen 41, 42 entlastet wird, indem diese Einstellungen automatisiert von der Steuereinrichtung 40 und/oder einer zusätzlichen Steuereinheit durchgeführt wird. Zur Erreichung dieses Automatisierungsgrades ist vorgesehen, dass zumindest ein Sensor 43 an dem Mähdrescher 1 angeordnet ist, der der Erfassung von Ernteguteigenschaften und/oder Betriebsparametern dient, mit welchem die Steuerungseinrichtung 40 und/oder der zusätzlichen Steuereinheit in Wirkverbindung steht. So kann beispielsweise in dem Schrägförderer 3 ein Sensor 43a zur Feuchtigkeitsmessung angeordnet sein, dessen Signale an die Steuereinrichtung 40 über Signalleitungen 44 übertragen und von dieser ausgewertet werden. Diese die Feuchtigkeit des Erntegutes repräsentierenden Signale werden zur automatischen Ansteuerung der Positionierung des Messerträgers 32 sowie des Reibbodens 35 durch die Aktorik 37 herangezogen, um eine optimale Häckselqualität zu erreichen. Ein weiterer Aspekt besteht darin, dass die Einstellung von Messerträger 32 und Reibboden 35 in Abhängigkeit von dem Fruchtart des Erntegutes erfolgt. Hierzu gibt die Bedienperson die zu verarbeitende Erntegutfruchtart durch eine entsprechende Eingabe durch die Kommunikationsschnittstellen 41, 42 an die Steuereinrichtung 40 vor, welche daraufhin die für die zu verarbeitende Fruchtart geeignetste Einstellung für den Messerträger 32 und den Reibboden 35 auswählt und hierfür die Aktorik 37 entsprechend ansteuert, um die jeweilige Einstellung umzusetzen. Wie weiter oben ausgeführt, werden Änderungen der Erntebedingungen während des Ernteprozesses, wie eine Änderung der Feuchtigkeit, sensorisch erfasst und von der Steuereinrichtung 40 ausgewertet, so dass bei der automatischen Einstellung der voneinander unabhängigen Positionierung des Messerträgers 32 und des Reibbodens 35 durch die Aktorik 37 diese kontinuierlich anpassbar ist.

Weiterhin kann im rückwärtigen Bereich des Mähdreschers 1 eine als Kamera 43b ausgeführte Bilderfassungseinrichtung angeordnet sein. Die Kamera 43b erstellt kontinuierlich Aufnahmen des von der Häckselvorrichtung 16 verarbeiteten Gutstromes 26. Diese Aufnahmen werden an die Steuereinrichtung 40 über die Signalleitung 44 übertragen, welche diese Aufnahmen mittels einer Bildverarbeitungssoftware auswertet. Die Auswertung der Bilder lässt Rückschlüsse auf die Häckselqualität zu, die mit den gegebenen Einstellungen von Messerträger 32 und Reibboden 35 erzielt werden. Entsprechend sind die Einstellungen des Messerträgers 32 und/oder des Reibbodens 35 durch die Ansteuerung der Aktorik 37 veränderbar, wenn die Häckselqualität nicht den Anforderungen entspricht, die beispielsweise aus einer zwischenzeitlichen Änderung der Erntebedingung während des Erntevorganges resultieren.

Um Änderungen der Erntebedingungen im Vorfeld erfassen zu können, kann es vorgesehen sein, eine als Kamera 43b ausgeführte Bilderfassungseinrichtung an der Vorderseite des Mähdreschers 1 anzuordnen, die in Fahrtrichtung des Mähdreschers 1 gesehen Aufnahmen des Erntegutbestandes erstellt. Hierdurch bestünde die Möglichkeit, frühzeitig feuchte Stellen in dem abzuerntenden Feld zu identifizieren und durch geeignete Maßnahmen darauf zu reagieren, wie weiter oben in diesem Zusammenhang bereits ausgeführten worden ist.

Anstelle oder zusätzlich zu einer oder mehreren Kameras oder Sensoren zur Feuchtigkeitsdetektion können weitere Sensoren zum Einsatz kommen, wie Ultraschall-, Laser-, Infrarot- oder Akustiksensoren.

**Bezugszeichenliste**

| | | | |
|---|---|---|---|
| **1** | Mähdrescher | **31** | Schlegelmesser |
| **2** | Getreideschneidwerk | **32** | Messerträger |
| **3** | Schrägförderer | **33** | Gegenmesser |
| **4** | Querförderorgan | **34** | Bodenabschnitt |
| **5** | Erntegut | **35** | Reibboden |
| **6** | Förderer | **36** | Reibleiste |
| **7** | Dreschwerk | **37** | Aktorik |
| **8** | Dreschtrommeln | **38a** | Hebel |
| **9** | Dreschkorb | **38b** | Hebel |
| **10** | Erster Teilstrom | **39a** | Hydraulikzylinder |
| **11** | Zweiter Teilstrom | **39b** | Hydraulikzylinder |
| **12** | Vorbereitungsboden | **40** | Steuereinrichtung |
| **13** | Siebebene | **41** | Eingabeeinheit |
| **14** | Reinigungseinrichtung | **42** | Ausgabeeinheit |
| **15** | Gebläseeinheit | **43** | Sensor |
| **16** | Häckselvorrichtung | **43a** | Feuchtigkeitssensor |
| **17** | Strohleittrommel | **43b** | Kamera |
| **18** | Hordenschüttler | **44** | Signalleitung |
| **19** | Abscheideorgan | **45** | Linearantrieb |
| **20** | Rücklaufboden | | |
| **21** | Körner | | |
| **22** | Körnerstrom | | |
| **23** | Förderelevator | | |
| **24** | Korntank | | |
| **25** | Korntankentleerförderer | | |
| **26** | Gutstrom | | |
| **27** | Federbolzen | | |
| | | | |
| **29** | Querschneide | | |
| **30** | Messertrommel | | |

## Patentansprüche

1. Mähdrescher (1), mit einer Häckselvorrichtung (16) zum Zerkleinern von Erntegut, die eine mit Messern (31) besetzte Messertrommel (30), einen mit Gegenmessern (33) besetzten Messerträger (32) sowie einen Reibboden (35) und eine diesem nachgeordnete Reibleiste (36) umfasst, wobei der Messerträger (32) und der Reibboden (35) um jeweils eine Schwenkachse schwenkbar sind, so dass sie in eine Position überführbar sind, in der die Gegenmesser (33) und/oder die Reibleiste (36) zumindest partiell in einen die Häckselvorrichtung (16) passierenden Gutstrom hineinragen, **dadurch gekennzeichnet, dass** der Messerträger (32) und der Reibboden (35) jeweils mittels einer Aktorik (37) werkzeuglos verstellbar sind, wobei der Mähdrescher (1) eine Steuereinrichtung (40) umfasst, durch welche die als mit einem Fluid beaufschlagbarer Zylinder (39a, 39b) und/oder als elektromechanischer Linearantrieb (45a, 45b) ausgeführte Aktorik (37) ansteuerbar ist und dass der Mähdrescher (1) zumindest einen zur Erfassung von Ernteguteigenschaften und/oder Betriebsparametern eingerichteten Sensor (43) umfasst, mit welchem die Steuereinrichtung (40) in Wirkverbindung steht, wobei die Ansteuerung des Messerträgers (32) und des Reibbodens (35) in Abhängigkeit von den Ernteguteigenschaften und/oder Betriebsparametern erfolgt.

2. Mähdrescher (1) nach Anspruch 1, **dadurch gekennzeichnet, dass** der Messerträger (32) und der Reibboden (35) unabhängig voneinander verstellbar sind.

3. Mähdrescher (1) nach einem der Ansprüche 1 oder 2, **dadurch gekennzeichnet, dass** der Verstellweg des Zylinders (39a, 39b) durch ein Begrenzungsmittel (27) beschränkbar ist.

4. Mähdrescher (1) nach einem der Ansprüche 1 bis 3, **dadurch gekennzeichnet, dass** der Verstellweg der Zylinders (39a, 39b) mittels eines Winkelsensors detektierbar ist.

5. Mähdrescher (1) nach einem der Ansprüche 1 bis 4, **dadurch gekennzeichnet, dass** die Aktorik (37) unabhängig von anderen Arbeitsaggregaten (2, 7, 14, 16) des Mähdreschers (1) ansteuerbar ist.

6. Mähdrescher (1) nach einem der Ansprüche 1 bis 5, **dadurch gekennzeichnet, dass** die Steuereinrichtung (40) zur automatischen Ansteuerung des Messerträgers (32) und des Reibbodens (35) eingerichtet ist.

7. Mähdrescher (1) nach einem der Ansprüche 1 bis 6, **dadurch gekennzeichnet, dass** der Mähdrescher (1) zumindest einen zur Erfassung von Ernteguteigenschaften und/oder Betriebsparametern eingerichteten Sensor (43) umfasst, mit welchem eine zusätzliche Steuereinheit in Wirkverbindung steht.

8. Mähdrescher (1) nach einem der Ansprüche 1 bis 7, **dadurch gekennzeichnet, dass** der Sensor (43) eine Bilderfassungseinrichtung (43b) umfasst.

9. Mähdrescher nach einem der Ansprüche 1 bis 7, **dadurch gekennzeichnet, dass** der Sensor (43) eine Einrichtung zur Detektion von Feuchtigkeit umfasst.

10. Mähdrescher (1) nach einem der Ansprüche 1 bis 9, **dadurch gekennzeichnet, dass** der Mähdrescher (1) eine Kabine umfasst, in welcher eine mit der Steuereinrichtung (40) verbindbare Eingabe- und Ausgabeeinheit (41, 42) angeordnet ist.

## Claims

1. A combine harvester (1) comprising a chopping device (16) for comminuting crop material, which includes a blade drum (30) equipped with blades (31), a blade carrier (32) equipped with counterpart blades (33), and a friction concave (35) and a friction bar (36) arranged downstream thereof, wherein the blade carrier (32) and the friction concave (35) are pivotable about a respective pivot axis so that they can be moved into a position in which the counterpart blades (33) and/or the friction bar (36) at least partially project into a flow of material passing through the chopping device (16), **characterised in that** the blade carrier (32) and the friction concave (35) are respectively adjustable by means of an actuator (37) without using a tool, wherein the combine harvester (1) includes a control device (40) by which a cylinder (39a, 39b) which can be acted upon with a fluid and/or the actuator (37) in the form of an electromechanical linear drive (45a, 45b) is actuable, and that the combine harvester (1) includes at least one sensor (43) which is adapted to detect crop material properties and/or operating parameters and to which the control device (40) is operatively connected, wherein that actuation of the blade carrier (32) and the friction concave (35) is effected in dependence on crop material properties and/or operating parameters.

2. A combine harvester (1) according to claim 1 **characterised in that** the blade carrier (32) and the friction bar (35) are adjustable independently of each other.

3. A combine harvester (1) according to one of claims 1 and 2 **characterised in that** the adjustment travel of the cylinder (39a, 39b) can be limited by a limiting means (27).

4. A combine harvester (1) according to one of claims 1 to 3 **characterised in that** the adjustment travel of the cylinder (39a, 39b) can be detected by means of an angle sensor.

5. A combine harvester (1) according to one of claims 1 to 4 **characterised in that** the actuator (37) is actuatable independently of other working assemblies (2, 7, 14, 16) of the combine harvester (1).

6. A combine harvester (1) according to one of claims 1 to 5 **characterised in that** the control device (40) is adapted for automatic actuation of the blade carrier (32) and the friction concave (35).

7. A combine harvester according to one of claims 1 to 6 **characterised in that** the combine harvester (1) includes at least one sensor (43) which is adapted to detect crop material properties and/or operating parameters and to which an additional control unit is operatively connected.

8. A combine harvester (1) according to one of claims 1 to 7 **characterised in that** the sensor (43) includes an image recording device (43b).

9. A combine harvester according to one of claims 1 to 7 **characterised in that** the sensor (43) includes a device for detecting moisture.

10. A combine harvester (1) according to one of claims 1 to 9 **characterised in that** the combine harvester (1) includes a cab in which an input and output unit (41, 42) which can be connected to the control device (40) is arranged.

## Revendications

1. Moissonneuse-batteuse (1) comprenant un dispositif de hachage (16) pour broyer du produit récolté, lequel dispositif de hachage comporte un tambour porte-couteaux (30) garni de couteaux (31), un porte-couteaux (32) garni de contre-couteaux (33) ainsi qu'un fond de friction (35) et une batte de friction (36) disposée en aval de celui-ci, le porte-couteaux (32) et le fond de friction (35) pouvant pivoter chacun autour d'un axe de pivotement, de sorte qu'ils peuvent être transférés dans une position où les contre-couteaux (33) et/ou la batte de friction (36) pénètrent au moins partiellement dans un flux de produit franchissant le dispositif de hachage (16), **caractérisée en ce que** le porte-couteaux (32) et le fond de friction (35) sont chacun réglables sans outil au moyen d'un ensemble actionneur (37), la moissonneuse-batteuse (1) comprenant un dispositif de commande (40) qui permet de commander l'ensemble actionneur (37) conçu sous la forme d'un vérin (39a, 39b) pouvant être sollicité par un fluide et/ou sous la forme d'un moyen d'entraînement linéaire électromécanique (45a, 45b), et **en ce que** la moissonneuse-batteuse (1) comprend au moins un capteur (43) qui est conçu pour détecter des propriétés du produit récolté et/ou des paramètres d'exploitation et avec lequel le dispositif de commande (40) est en liaison active, la commande du porte-couteaux (32) et du fond de friction (35) s'effectue en fonction de propriétés du produit récolté et/ou de paramètres d'exploitation.

2. Moissonneuse-batteuse (1) selon la revendication 1, **caractérisée en ce que** le porte-couteaux (32) et le fond de friction (35) sont réglables indépendamment l'un de l'autre.

3. Moissonneuse-batteuse (1) selon une des revendications 1 ou 2, **caractérisée en ce que** la course de réglage du vérin (39a, 39b) peut être limitée par l'intermédiaire d'un moyen de limitation (27).

4. Moissonneuse-batteuse (1) selon une des revendications 1 à 3, **caractérisée en ce que** la course de réglage du vérin (39a, 39b) est détectable au moyen d'un capteur d'angle.

5. Moissonneuse-batteuse (1) selon une des revendications 1 à 4, **caractérisée en ce que** l'ensemble actionneur (37) peut être commandé indépendamment d'autres organes de travail (2, 7, 14, 16) de la moissonneuse-batteuse (1).

6. Moissonneuse-batteuse (1) selon une des revendications 1 à 5, **caractérisée en ce que** le dispositif de commande (40) est conçu pour commander automatiquement le porte-couteaux (32) et le fond de friction (35).

7. Moissonneuse-batteuse selon une des revendications 1 à 6, **caractérisée en ce que** la moissonneuse-batteuse (1) comprend au moins un capteur (43) qui est conçu pour détecter des propriétés du produit récolté et/ou des paramètres d'exploitation et avec lequel une unité de commande supplémentaire est en liaison active.

8. Moissonneuse-batteuse (1) selon une des revendications 1 à 7, **caractérisée en ce que** le capteur (43) comprend un dispositif d'enregistrement d'images (43b).

9. Moissonneuse-batteuse selon une des revendications 1 à 7, **caractérisé en ce que** le capteur (43) comprend un dispositif pour détecter l'humidité.

10. Moissonneuse-batteuse (1) selon une des revendications 1 à 9, **caractérisée en ce que** la moissonneuse-batteuse (1) comprend une cabine dans laquelle est disposée une unité d'entrée et de sortie (41, 42) apte à être connectée au dispositif de commande (40).
